# EUROPÄISCHE PATENTSCHRIFT

(11) **EP 3 445 642 B1**
(45) Veröffentlichungstag und Bekanntmachung des Hinweises auf die Patenterteilung: **16.06.2021**
(21) Anmeldenummer: 17720057.3
(22) Anmeldetag: 21.04.2017
(51) Int. Cl.: B62D 29/00, B62D 25/00, B60R 13/08, B29C 44/18, B29K 75/00, B29K 105/00, B29K 667/00, B29K 675/00, B29K 677/00, B29K 705/00, B29L 31/30

(54) **DÄMMELEMENT**
INSULATION ELEMENT
ÉLÉMENT D'ISOLATION

(30) Priorität: 22.04.2016 EP 16166719
(43) Veröffentlichungstag der Anmeldung: 27.02.2019
(73) Patentinhaber: Sika Technology AG, 6340 Baar (CH)
(72) Erfinder: ULMANN, Stefan, 5621 Zufikon (CH)
(74) Vertreter: Sika Patent Attorneys
(86) Internationale Anmeldenummer: PCT/EP2017/059462
(87) Internationale Veröffentlichungsnummer: WO 2017/182606

(56) Entgegenhaltungen:
- EP-A1- 1 591 224
- WO-A1-2014/095620
- DE-A1- 10 148 770
- GB-A- 2 463 858
- JP-A- 2006 001 472
- JP-A- 2008 273 035

## Beschreibung

Die Erfindung betrifft ein Dämmelement mit einem Trägerelement und einem expandierbaren Material, insbesondere zur Dämmung eines Strukturelements mit einem Hohlraum in einem Fahrzeug. Sie betrifft des Weiteren ein System mit einem Strukturelement und einem darin angeordneten Dämmelement.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Abdichtungs- und/oder Verstärkungselementen 16 abgedichtet bzw. verstärkt.

Fig. 2a und 2b zeigen schematisch ein bekanntes Konzept zum abdichtenden und/oder verstärkenden Verschluss von Öffnungen bzw. Hohlräumen in einem Kraftfahrzeug.
Dabei zeigt die Fig. 2a ein Dämmelement 16 vor einer Expansion eines expandierbaren Materials 13. Fig. 2b zeigt dasselbe Dämmelement 16, jedoch nach einer Expansion des expandierbaren Materials 13, also mit dem expandierten Material 13'.

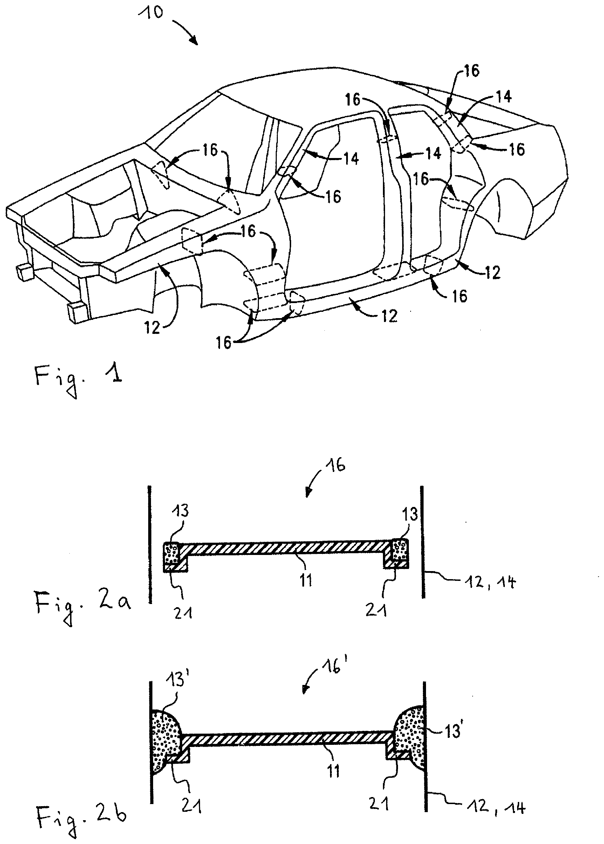

Das Dämmelement 16 befindet sich in einem Hohlraum einer Karosseriestruktur, wie sie beispielsweise in Fig. 1 dargestellt ist. Ein Abschnitt eines solchen Strukturelements 12, 14 einer Karosserie ist in den Fig. 2a und 2b schematisch dargestellt. Das Dämmelement 16 umfasst ein Trägerelement 11, welches einen Randbereich 21 hat. Das expandierbare Material 13 ist dabei im Wesentlichen auf diesem Randbereich 21 des Trägerelementes 11 angeordnet.

Vor der Expansion des expandierbaren Materials 13 besteht zwischen dem Dämmelement 16 und dem Strukturelement 12, 14 ein Spalt. Dieser Spalt erlaubt es, das Strukturelement 12, 14 zu beschichten, um einen Korrosionsschutz des Strukturelementes 12, 14 zu erreichen. Nach dieser Beschichtung wird das expandierbare Material 13 üblicherweise durch eine Wärmeeinwirkung expandiert, wobei das expandierte Material 13' dadurch den Spalt zwischen dem Dämmelement 16 und dem Strukturelement 12, 14 schliesst. Zudem wird durch die Expansion des expandierbaren Materials 13 auch zugleich eine Fixierung des Dämmelementes 16' im Strukturelement 12, 14 erreicht. Ein derart im Strukturelement 12, 14 befestigtes Dämmelement 16' verstärkt einerseits das Strukturelement 12, 14 und verschliesst andererseits den Hohlraum im Strukturelement 12, 14.

Nachteilig an solchen Dämmelementen 16 ist es, dass damit das Strukturelement 12, 14 bezüglich Akustik nicht optimal gedämmt werden kann. Zwar vermag das expandierte Material 13' und auch der Träger 11 einen Teil der Schallwellen absorbieren. Jedoch können sich Schallwellen, welche sich durch das Strukturelement 12, 14 fortpflanzen, weiterhin auch teilweise durch den Träger 11 fortpflanzen.

Die JP 2008 273035 A offenbart ein Dämmelement gemäß dem Oberbegriff des Anspruchs 1.

Der Erfindung liegt daher die Aufgabe zugrunde, ein verbessertes Dämmelement der oben erläuterten Art bereitzustellen, insbesondere ein Dämmelement mit verbesserten akustischen Eigenschaften.

Diese Aufgabe wird gelöst durch ein Dämmelement zur Dämmung eines Strukturelementes in einem Fahrzeug, das Dämmelement umfassend ein Trägerelement mit einer ersten Oberfläche und einer zweiten Oberfläche und ein expandierbares Material, welches auf dem Trägerelement angeordnet ist. Dabei ist das expandierbare Material auf einem ersten Teilbereich der ersten Oberfläche des Trägerelementes angeordnet, und ein zweiter Teilbereich der ersten Oberfläche ist frei von expandierbarem Material. Die erste Oberfläche des Trägerelementes ist dabei nach einer Expansion des expandierbaren Materials vollständig mit expandiertem Material bedeckt.

Diese Lösung hat den Vorteil, dass dadurch eine markant bessere akustische Dämmung erreicht werden kann im Unterschied zu herkömmlichen Dämmelementen. Bei der hier vorgeschlagenen Lösung können sich Schallwellen weniger gut durch das Strukturelement fortpflanzen, weil das Oberfläche des Trägerelementes sowohl Teilbereiche angeordnet sind, welche frei von expandierbarem Material sind, als auch Teilbereiche, auf welchen expandierbares Material angeordnet ist. Dabei lässt diese Aufteilung der ersten Oberfläche des Trägerelementes verschiedenste Muster der jeweiligen Teilbereiche zu. Wesentlich dabei ist es, dass nach der Expansion die gesamte erste Oberfläche des Trägerelementes vollständig mit expandierbarem Material bedeckt ist.

Die Bezeichnung "Dämmelement" umfasst im Zusammenhang mit dieser Erfindung Elemente zur Abschottung und/oder Verstärkung und/oder Dämmung eines Strukturelementes. Diese verschiedenen Eigenschaften eines solchen Dämmelementes können dabei einzeln oder in Kombination miteinander auftreten.

Die erste Oberfläche und die zweite Oberfläche des Trägerelementes sind einander im Wesentlichen gegenüberliegend angeordnet.

Die erste Oberfläche und die zweite Oberfläche des Trägerelementes sind als Flächen einer Oberseite und einer Unterseite des Trägerelementes ausgebildet.

Die erste Oberfläche und die zweite Oberfläche des Trägerelementes sind im Wesentlichen in entgegengesetzte Richtungen exponiert.

Die Bezeichnung "erste Oberfläche" umfasst im Zusammenhang mit dieser Erfindung nur die tatsächliche Oberfläche einer ersten Seite des Trägerelementes, und nicht Flächen über etwaigen im Trägerelement vorgesehenen Aussparungen oder Ähnlichem.
In Ausführungsbeispielen, in denen die erste Oberfläche nicht im Wesentlichen in einer Ebene liegt, wird im Sinne dieser Erfindung auf eine Projektion der ersten Oberfläche auf eine Ebene Bezug genommen. Somit gelten in diesen Fällen Aufteilungen dieser ersten Oberfläche oder Verhältnisse dieser ersten Oberfläche in Bezug zu einem Gewicht des expandierbaren Materiales etc. jeweils für die oben genannte Projektion.
Gleiches gilt für die Bezeichnung "zweite Oberfläche".

In einer beispielhaften Ausführungsform beträgt der erste Teilbereich zwischen 10 und 80% der ersten Oberfläche. In einer bevorzugten Weiterbildung beträgt der erste Teilbereich zwischen 15 und 60% der ersten Oberfläche, und in einer weiteren bevorzugten Weiterbildung beträgt der erste Teilbereich zwischen 20 und 50% der ersten Oberfläche.

In einer alternativen bevorzugten Weiterbildung beträgt der erste Teilbereich zwischen 25 und 75% der ersten Oberfläche, und in einer weiteren bevorzugten alternativen Weiterbildung beträgt der erste Teilbereich zwischen 35 und 70% der ersten Oberfläche.

Eine solche prozentuale Aufteilung der ersten Oberfläche in Teilbereiche, welche frei von expandierbarem Material sind und Teilbereiche, welche mit expandierbarem Material bedeckt sind, hat den Vorteil, dass dadurch eine vollständige Bedeckung mit expandiertem Material der Trägeroberfläche der ersten Oberfläche des Trägerelementes erreicht werden kann, bei möglichst geringem Einsatz von expandierbarem Material.

Zudem sind Dämmelemente mit einer solchen prozentualen Aufteilung der ersten Oberläche in Teilbereiche, welche frei von expandierbarem Material sind und Teilbereiche, welche mit expandierbarem Material bedeckt sind, kostengünstig und effizient herstellbar, weil dabei ein herkömmliches Spritzgussverfahren verwendet werden kann.

In einer beispielhaften Ausführungsform beträgt ein Verhältnis einer Masse des expandierbaren Materials zu einer Grösse der ersten Oberfläche zwischen 0,15 und 0,75 g/cm². In einer bevorzugten Weiterbildung beträgt dieses Verhältnis zwischen 0,2 und 0,5 g/cm². In einer weiteren bevorzugten Weiterbildung beträgt dieses Verhältnis zwischen 0,25 und 0,35 g/cm². In einer weiteren bevorzugten Weiterbildung beträgt dieses Verhältnis zwischen 0,15 und 0,35 g/cm². In einer weiteren bevorzugten Weiterbildung beträgt dieses Verhältnis zwischen 0,15 und 0,25 g/cm².

Ein solcher Einsatz von expandierbarem Material im Verhältnis zur Grösse des Trägerelementes hat den Vorteil, dass dadurch wiederum mit möglichst wenig expandierbarem Material eine vollständige Abdeckung der ersten Oberfläche des Trägerelementes nach Expansion des expandierbaren Materials erreicht werden kann. Je nach Expansionsvermögen des expandierbaren Materials kann hier eine geeignete Masse von expandierbarem Material pro Flächeneinheit gewählt werden.

In einer beispielhaften Ausführungsform hat das expandierbare Material eine Expansionsrate von 300 bis 3000 %. In einer vorteilhaften Weiterbildung beträgt die Expansionsrate des expandierbaren Materials zwischen 1000 und 2700 %. In einer weiteren bevorzugten Weiterbildung beträgt die Expansionsrate des expandierbaren Materials zwischen 1500 bis 2500 %.

Die Wahl einer solchen Expansionsrate hat den Vorteil, dass dadurch sichergestellt wird, dass die zweiten Teilbereiche, welche frei von expandierbarem Material sind, nach der Expansion des expandierbaren Materials vollständig mit expandiertem Material bedeckt sind.

In einer beispielhaften Ausführungsform beträgt eine Breite des Trägerelementes mehr als 50 mm, und eine Länge des Trägerelementes beträgt ebenfalls mehr als 50 mm. In einer Weiterbildung betragen Länge und Breite des Trägerelementes mehr als 60 mm, 70 mm, oder 80 mm.

Bei unregelmässig geformten Trägerelementen wird die Breite im Sinne dieser Erfindung an einer stärksten Stelle hinsichtlich einer Breitenausdehnung des Trägerelementes gemessen, und die Länge wird ebenfalls an einer stärksten Stelle hinsichtlich einer Längenausdehnung des Trägerelementes gemessen.

In einer beispielhaften, nicht beanspruchten Ausführungsform bildet der erste Teilbereich der ersten Oberfläche des ersten Trägerelementes ein zusammenhängendes Muster. Das Vorsehen eines solchen zusammenhängenden Muster hat den Vorteil, dass dadurch bei der Herstellung des Dämmelementes das expandierbare Material auf kostengünstigere Art auf das Trägerelement gebracht werden kann. Bei einem zusammenhängenden Muster kann das expandierbare Material beispielsweise von nur einer Applikationsöffnung auf die vorgesehenen Stellen gebracht werden.

In einer beispielhaften Weiterführung hat der erste Teilbereich bandförmige Elemente.

Solche bandförmigen Elemente haben den Vorteil, dass dadurch eine effiziente Abdeckung der Oberfläche des Trägerelementes erreicht werden kann, weil sich mit solchen bandförmigen Elementen die Oberfläche des Trägerelementes in viele kleine zweite Teilbereiche, welche frei von expandierbarem Material sind, aufteilen lässt. Solche kleinen zweiten Teilbereiche der ersten Oberfläche sind dabei einfacher zu überbrücken durch die Expansion des expandierbaren Materials als grössere zweite Teilbereiche.

In einer beispielhaften, nicht beanspruchten Weiterbildung ist ein erstes bandförmiges Element entlang einem Umfang der ersten Oberfläche des Trägerelementes angeordnet.

Eine solche Anordnung eines ersten bandförmigen Elementes um das Trägerelement herum (auch "race track" genannt) hat den Vorteil, dass dadurch der Spalt zwischen Dämmelement und Strukturelement bei der Expansion des expandierbaren Materials sicher und effizient geschlossen werden kann.

In einer beispielhaften Weiterbildung erstreckt sich ein zweites bandförmiges Element quer über einen inneren Bereich der ersten Oberfläche des ersten Trägerelementes.

Ein solches zweites bandförmiges Element hat den Vorteil, dass dadurch der innere Bereich der ersten Oberfläche, welcher grundsätzlich frei von expandierbarem Material ist, in kleinere zweite Teilbereiche aufgeteilt werden kann, welche ihrerseits besser überbrückt werden können durch die Expansion des expandierbaren Materials. Je nach Grösse des Trägerelementes können selbstverständlich auch mehrere solcher zweiten bandförmigen Elemente quer über den inneren Bereich der ersten Oberfläche des Trägerelementes angeordnet werden.

In einer beispielhaften Weiterbildung hat das zweite bandförmige Element einen rechteckigen oder V-förmigen oder halbrunden Querschnitt.

Die Wahl eines geeigneten Querschnittes des zweiten bandförmigen Elementes hat den Vorteil, dass dadurch eine Expansionsrichtung des expandierbaren Materials gesteuert bzw. optimiert werden kann. Die Auswahl eines geeigneten Querschnittes kann dabei je nach Geometrie des Trägerelementes gewählt werden.

In einer beispielhaften Weiterbildung ist das zweite bandförmige Element in einer Vertiefung des Trägerelementes angeordnet.

Das Vorsehen einer solchen Vertiefung im Trägerelement hat den Vorteil, dass dadurch die Herstellung des Dämmelementes vereinfacht wird, indem beispielsweise das expandierbare Material in diese Vertiefungen vergossen werden kann, und andererseits werden die Dämmelemente vor der Expansion robuster und besser handhabbar gemacht, indem das expandierbare Material geschützt in den Vertiefungen des Trägerelementes angeordnet ist.

Erfindungsgemäß besteht der erste Teilbereich der ersten Oberfläche des Trägerelementes, welche mit expandierbarem Material bedeckt ist, aus mehreren nicht zusammenhängenden Elementen.

Das Vorsehen solcher mehreren nicht zusammenhängenden Elemente hat den Vorteil, dass dadurch ein Muster des ersten Teilbereiches auf der ersten Oberfläche des Trägerelementes freier gewählt werden kann. Dadurch kann das expandierbare Material strategisch ideal auf der Oberfläche des Trägerelementes angeordnet werden. Beispielsweise kann das expandierbare Material dabei so auf der Oberfläche angeordnet werden, dass die zweiten Teilbereiche, welche frei von expandierbarem Material sind, ein bestimmtes Ausmass nicht überschreiten, wie beispielsweise eine bestimmte Breite zwischen zwei benachbarten Elementen von dem ersten Teilbereich.

In einer beispielhaften Ausführungsform bestehen die nicht zusammenhängenden expandierbaren Materialien, welche jeweils auf den nicht zusammenhängenden Teilen des ersten Teilbereiches angeordnet sind, aus demselben expandierbaren Material.

In einer beispielhaften Ausführungsform hat das Dämmelement zwei nicht zusammenhängende expandierbare Materialien, welche aus demselben Material bestehen.

In einer weiteren beispielhaften Ausführungsform hat das Dämmelement drei oder mehr nicht zusammenhängende expandierbare Materialien, wobei zumindest zwei dieser nicht zusammenhängenden expandierbaren Materialien aus demselben Material bestehen.

Erfindungsgemäß ist ein erstes Element bandförmig entlang dem Umfang der ersten Oberfläche des Trägers angeordnet, wobei ein oder mehrere weitere Elemente im inneren Bereich der ersten Oberfläche des Trägerelementes angeordnet sind.

Das Vorsehen eines bandförmigen umlaufenden Elementes hat den Vorteil, dass dadurch der Spalt zwischen Dämmelement und Strukturelement effizient und sicher geschlossen werden kann bei der Expansion des expandierbaren Materials. Das Vorsehen der weiteren Elemente im inneren Bereich der ersten Oberfläche hat den Vorteil, dass dadurch die zweiten Teilbereiche, welche frei von expandierbarem Material sind, eine bestimmte Ausdehnung nicht überschreiten. Dies erlaubt eine sichere vollständige Bedeckung mit expandiertem Material bei gleichzeitig möglichst geringem Einsatz an expandierbarem Material.

In einer beispielhaften Weiterbildung sind die weiteren Elemente untereinander verbunden.

Das Verbinden dieser weiteren Elemente untereinander hat den Vorteil, dass dadurch die Produktion der Dämmelemente vereinfacht bzw. verbilligt werden kann. Beispielsweise können miteinander verbundene weitere Elemente bei der Applikation des expandierbaren Materials auf dem Träger mit nur einer Applikationsöffnung für das expandierbare Material appliziert werden.

In einer beispielhaften Ausführungsform sind die Elemente in einem regelmässigen Muster über die erste Oberfläche verteilt.

Ein solches regelmässiges Muster hat einerseits den Vorteil, dass die zweiten Teilbereiche über die gesamte Oberfläche gleich ausgestaltet sind und dabei eine bestimmte Ausdehnung nicht überschreiten, und andererseits haben solche regelmässigen Muster den Vorteil, dass dafür einfache Werkzeuge für die Herstellung des Dämmelementes verwendet werden können.

Weiterhin wird ein System mit einem Strukturelement und einem darin angeordneten Dämmelement gemäss obiger Beschreibung vorgeschlagen.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie gemäss Stand der Technik;
- Fig. 2a und 2b: schematische Darstellungen zur Erläuterung eines beispielhaften Dämmelementes gemäss Stand der Technik;

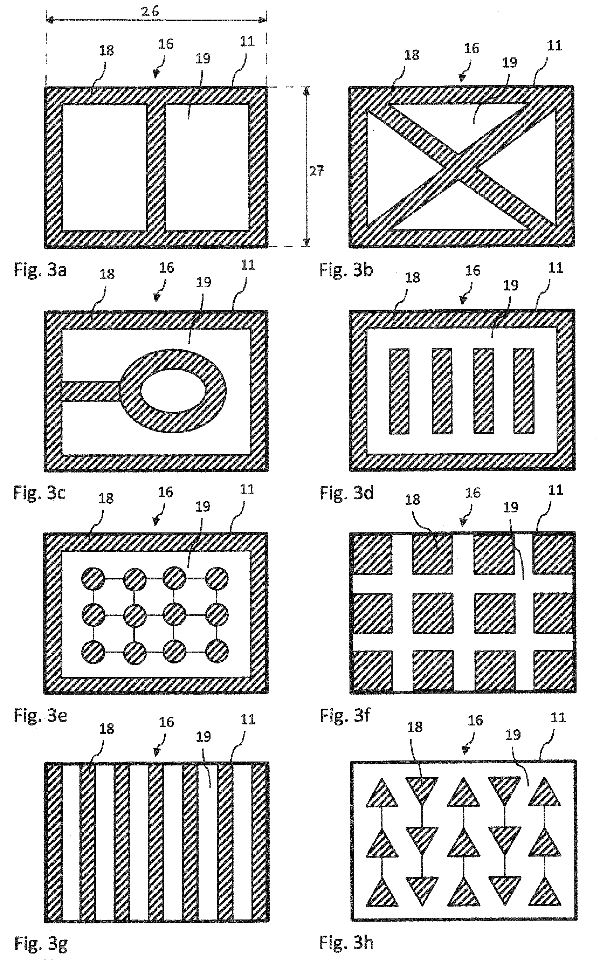

- Fig. 3a bis 3h: schematische Darstellungen einer ersten Oberfläche des Trägerelementes mit erstem und zweitem Teilbereich;

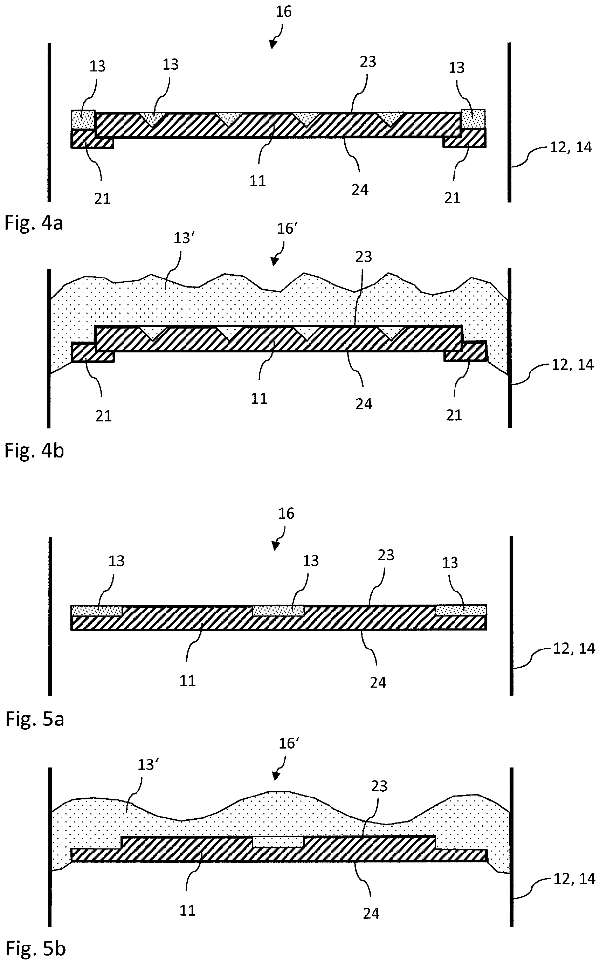

- Fig. 4a und 4b: schematische Darstellungen eines beispielhaften Dämmelementes in einem Strukturelement; und
- Fig. 5a und 5b: schematische Darstellungen eines beispielhaften Dämmelementes in einem Strukturelement.

In den Fig. 3a bis 3h ist jeweils eine Draufsicht auf ein beispielhaftes Dämmelement 16 dargestellt, so dass lediglich die erste Oberfläche des Trägerelementes 11 sichtbar ist. Dabei umfasst diese erste Oberfläche des Trägerelementes 11 einen ersten Teilbereich 18, auf welchem expandierbares Material angeordnet ist, und einen zweiten Teilbereich 19, welcher frei von expandierbarem Material ist. Der erste Teilbereich 18 und der zweite Teilbereich 19 können dabei eine zusammenhängende Fläche bilden oder auch mehrere nicht zusammenhängende Flächen. In allen Ausführungsbeispielen gemäss den Fig. 3a bis 3h sind der erste Teilbereich 18 und der zweite Teilbereich 19 jeweils so angeordnet, dass nach einer Expansion des expandierbaren Materials die erste Oberfläche des Trägerelementes 11 vollständig mit expandiertem Material bedeckt ist. Dies wird insbesondere dadurch erreicht, indem die zweiten Teilbereiche bzw. der zweite Teilbereich gewisse kritische Ausmasse nicht überschreitet.

Beispielsweise kann der zweite Teilbereich 19 bzw. die zweiten Teilbereiche 19 derart gewählt werden, dass eine Breite dieser zweiten Teilbereiche 19 bzw. dieses zweiten Teilbereichs 19 ein bestimmtes Mass nicht überschreitet. Somit kann das expandierbare Material, welches auf den angrenzenden ersten Teilbereichen 18 angeordnet ist, die zweiten Teilbereiche 19 bei der Expansion überbrücken.

In den beispielhaft dargestellten Ausführungsformen gibt es verschiedene Ausgestaltungen der Teilbereiche 18, 19. Einerseits kann beispielsweise der erste Teilbereich 18 als ein zusammenhängendes Muster ausgebildet sein, wie dies in den Fig. 3a, 3b und 3c der Fall ist. In anderen Ausführungsbeispielen besteht der erste Teilbereich 18 aus mehreren nicht zusammenhängenden Elementen, wie dies in den Fig. 3d bis 3h dargestellt ist.

Des Weiteren kann der erste Teilbereich 18 eines oder mehrere bandförmige Elemente aufweisen. Dies ist beispielhaft in den Fig. 3a, 3b, 3c, 3d, 3e und 3g abgebildet. Dabei kann ein erstes bandförmiges Element entlang dem Umfang der ersten Oberfläche des Trägerelementes 11 angeordnet sein, wie in den Fig. 3a bis 3e gezeigt. Der erste Teilbereich 18 kann jedoch auch andersartig auf dem Trägerelement 11 angeordnet sein, wie dies in den Fig. 3f und 3h abgebildet ist.

In einigen Ausführungsbeispielen ist der erste Teilbereich 18 als regelmässiges Muster über die erste Oberfläche des Trägerelementes 11 verteilt. Dies ist in den Abbildungen 3f bis 3h der Fall.

Wie aus den dargestellten Ausführungsbeispielen ersichtlich ist, sind verschiedenste Anordnungen des ersten Teilbereiches 18 und des zweiten Teilbereiches 19 auf der ersten Oberfläche des Trägerelementes 11 möglich. Wesentlich dabei ist es, dass nach einer Expansion des expandierbaren Materials, welches auf dem ersten Teilbereich 18 angeordnet ist, die erste Oberfläche des Trägerelementes 11 vollständig mit expandiertem Material bedeckt ist.

Das Trägerelement 11 des Dämmelementes 16 hat dabei eine Breite 27 und eine Länge 26. In den Ausführungsbeispielen gemäss den Figuren 3a bis 3h betragen sowohl Breite 27 als auch Länge 26 des Trägerelementes mehr als 50 mm.

In den Fig. 4a und 4b ist ein Querschnitt des Dämmelementes 16 aus Fig. 3d dargestellt. Dabei zeigt Fig. 4a das Dämmelement 16 vor einer Expansion des expandierbaren Materials 13, und Fig. 4b zeigt ein Dämmelement 16' nach Expansion des expandierbaren Materials 13, also das expandierte Material 13'.

Im Ausführungsbeispiel gemäss den Fig. 4a und 4b hat das Trägerelement 11 einen Randbereich 21, welcher leicht versetzt zu einem inneren Bereich des Trägers 11 ausgestaltet ist. Der Randbereich 21 kann dabei einstückig mit dem Trägerelement 11 (nicht dargestellt) oder wie in den Figuren 4a und 4b dargestellt nicht einstückig ausgebildet sein. Auf diesem Randbereich 21 ist bandförmig das expandierbare Material 13 angeordnet, wobei es entlang einem Umfang der ersten Oberfläche 23 des Trägerelementes 11 angeordnet ist. Zudem sind auf dem Trägerelement 11 weitere bandförmige Elemente von expandierbarem Material 13 auf ersten Teilbereichen der ersten Oberfläche 23 des Trägerelementes 11 angeordnet. In diesem Ausführungsbeispiel sind diese weiteren bandförmigen Elemente in Vertiefungen des Trägerelementes 11 angeordnet. Die weiteren bandförmigen Elemente haben dabei einen V-förmigen Querschnitt.

In Fig. 4b ist das Dämmelement 16' im Strukturelement 12, 14 nach Expansion dargestellt. Dabei ist ersichtlich, dass das expandierte Material 13' die erste Oberfläche 23 des Trägerelementes 11 vollständig bedeckt. Zudem überbrückt das expandierte Material 13' den Spalt zwischen Dämmelement 16 und Strukturelement 12, 14, welcher vor der Expansion bestand. Dadurch wird das Dämmelement 16' im Strukturelement 12, 14 örtlich befestigt. Durch die vollständige Bedeckung der ersten Oberfläche 23 des Trägerelementes 11 ist der gesamte Querschnitt des Strukturelementes 12, 14 mit expandiertem Material 13' ausgefüllt. Dadurch wird eine verbesserte akustische Dämmleistung des Dämmelementes 16 erreicht.

In den Fig. 5a und 5b ist eine weitere beispielhafte Ausführungsform eines Dämmelementes 16 in einem Strukturelement 12, 14 vor und nach Expansion des expandierbaren Materials 13 dargestellt. Wiederum hat das Trägerelement 11 eine erste Oberfläche 23 und eine zweite Oberfläche 24. Auf der ersten Oberfläche 23 hat es erste Teilbereiche, welche mit expandierbarem Material 13 bedeckt sind. Zudem hat es zweite Teilbereiche, welche frei von expandierbarem Material 13 sind. In diesem Ausführungsbeispiel hat der Träger 11 keine versetzten Randbereiche 21. Das hier dargestellte Dämmelement 16 entspricht dem in Fig. 3a in Draufsicht gezeigten Dämmelement 16. Ähnlich wie das Dämmelement 16 in den Fig. 4a und 4b ist auch hier der erste Teilbereich mit einem ersten bandförmigen Element entlang einem Umfang der ersten Oberfläche des Trägerelementes 11 angeordnet. Zudem hat es ein zweites bandförmiges Element, welches quer über einen inneren Bereich der ersten Oberfläche 23 des Trägerelementes 11 angeordnet ist.

Nach der Expansion des expandierbaren Materials 13 ist die erste Oberfläche 23 des Trägerelementes 11 vollständig mit expandiertem Material 13' bedeckt. Wiederum ist auch eine Lücke zwischen Dämmelement 16 und Strukturelement 12, 14 mit expandiertem Material 13' geschlossen. Somit deckt das expandierte Material 13' auch in diesem Ausführungsbeispiel vollständig einen Querschnitt des Strukturelementes 12, 14 ab, wodurch verbesserte akustische Dämmeigenschaften resultieren.

### Expandierbare (schäumbare) Materialien

Als expandierbares Material kann grundsätzlich jedes beliebige Material eingesetzt werden, das kontrolliert zur Schäumung gebracht werden kann. Dieses Material kann dabei Verstärkungseigenschaften aufweisen oder auch nicht. Typischerweise wird das schäumbare Material thermisch, durch Feuchtigkeit oder durch elektromagnetische Strahlung geschäumt.

Ein solches expandierbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage, Schaumstrukturen in Polymeren zu erzeugen.

Bevorzugt wird das expandierbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.
Geeignete Treibmittel sind beispielsweise auch kommerziell erhältlich unter dem Handelsnamen Expancel® von der Firma Akzo Nobel, Niederlande, oder unter dem Handelsnamen Celogen® von der Firma Chemtura Corp., USA. Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 200 °C, insbesondere von 140 °C bis 190 °C, bevorzugt von 160 °C bis 180 °C, schäumbar.

Als expandierbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete expandierbare Materialien sind Treibmittel enthaltende einkomponentige Polyurethanzusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon® BF 1350 und Vestagon® BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschreiben sind in EP 0 204 970.

Weiterhin eignen sich als expandierbare Materialien Treibmittel enthaltende zweikomponentige Epoxid/Polyurethan-Zusammensetzungen, wie sie beispielsweise beschrieben sind in WO 2005/080524 A1.

Weiterhin eignen sich als expandierbare Materialien Treibmittel enthaltende Ethylen-Vinyl-Acetat-Zusammensetzungen.

Ebenfalls geeignete expandierbare Materialien werden unter dem Handelsnamen SikaBaffle® 240, SikaBaffle® 250 oder SikaBaffle® 255 von der Sika Corp., USA, vertrieben und sind in den Patenten US 5,266,133 und US 5,373,027 beschrieben.

Weiterhin geeignete expandierbare Materialien werden unter den Handelsnamen SikaBaffle®-450, SikaBaffle®-420, SikaBaffle®-250NT, SikaBaffle®-255 und SikaBaffle®-250PB2 von der Sika vertrieben. Solche expandierbare Materialien haben eine Expansionsrate von ungefähr 300 - 3000 % und sind für die vorliegende Erfindung besonders bevorzugt.

Insbesondere SikaBaffle®-450 mit einer Expansionsrate von mehr als 1200 % eignet sich für die Zwecke der vorliegenden Erfindung, weil durch eine hohe Expansionsrate der zweite Teilbereich der ersten Oberfläche bei der Expansion des expandierbaren Materiales zuverlässig bedeckt wird.

In einem konkreten bevorzugten Ausführungsbeispiel wird eine Anordnung des expandierbaren Materials auf dem Trägerelement gemäss Fig. 3a mit einem Verhältnis einer Masse des expandierbaren Materials zu einer Grösse der ersten Oberfläche von ungefähr 2,5 g/cm² ausgeführt. Dabei weist das expandierbare Material bei einer Wärmeeinwirkung von 180°C über 30 min eine Expansionsrate von ungefähr 2000 % auf. Dadurch kann eine vollständige Bedeckung der ersten Oberfläche mit expandiertem Material erreicht werden, woraus sich die beschriebenen Vorteile der Erfindung bezüglich akustischer Dämmung ergeben.

Als expandierbare Materialien mit Verstärkungseigenschaften sind beispielsweise diejenigen bevorzugt, welche unter dem Handelsnamen SikaReinforcer® 941 von der Sika Corp., USA, vertrieben werden. Diese sind beschrieben in US 6,387,470.

### Trägermaterial

Das Trägerelement kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder gewachsene organische Materialien, insbesondere Holz- oder andere (gepresste) Faserwerkstoffe oder glasartige oder keramische Materialien; speziell auch geschäumte Materialien dieser Art; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet. Auch Kombinationen mit Fasern, wie beispielsweise Glasfasern oder Karbonfasern, sind möglich.

Weiterhin kann das Trägerelement einen beliebigen Aufbau und eine beliebige Struktur aufweisen. Es kann beispielsweise massiv, hohl, oder geschäumt sein oder eine gitterartige Struktur aufweisen. Die Oberfläche des Trägerelements kann typischerweise glatt, rau oder strukturiert sein.

Bei erfindungsgemässen Abdichtungs- und Verstärkungselementen, bei welchen sich das expandierbare Material auf einem Trägerelement befindet, unterscheidet sich das Herstellungsverfahren dementsprechend, ob das Trägerelement aus einem durch Spritzguss verarbeitbaren Material besteht oder nicht. Ist dies der Fall, wird üblicherweise ein Zweikomponenten-Spritzgussverfahren eingesetzt. Dabei wird zuerst eine erste Komponente, in diesem Fall das Trägerelement, gespritzt. Nach Erstarren dieser ersten Komponente wird die Kavität im Werkzeug vergrössert, bzw. angepasst, oder der hergestellte Spritzling wird in ein neues Werkzeug gelegt, und eine zweite Komponente, in diesem Fall das expandierbare Material, wird mit einem zweiten Spritzaggregat an die erste Komponente angespritzt.

Besteht das Trägerelement aus einem Material, welches sich nicht durch das Spritzgussverfahren herstellen lässt, also beispielsweise aus einem Metall, wird das Trägerelement in ein entsprechendes Werkzeug gelegt und das expandierbare Material wird an das Trägerelement angespritzt. Selbstverständlich besteht auch die Möglichkeit das expandierbare Material durch spezielle Befestigungsmittel oder -verfahren an dem Trägerelement zu befestigen.

## Patentansprüche

1. Dämmelement (16) zur Dämmung eines Strukturelementes (12, 14) in einem Fahrzeug, das Dämmelement (16) umfassend
ein Trägerelement (11) mit einer ersten Oberfläche (23) und einer zweiten Oberfläche (24)
und ein expandierbares Material (13), welches auf dem Trägerelement (11) angeordnet ist,
wobei das expandierbare Material (13) auf einem ersten Teilbereich (18) der ersten Oberfläche (23) des Trägerelementes (11) angeordnet ist und ein zweiter Teilbereich (19) der ersten Oberfläche (23) frei von expandierbarem Material (13) ist, so dass die erste Oberfläche (23) des Trägerelementes (11) nach einer Expansion des expandierbaren Materials (13) vollständig mit expandiertem Material (13') bedeckt ist,
**dadurch gekennzeichnet, dass** der erste Teilbereich (18) aus mehreren nicht zusammenhängenden Elementen besteht, und dass ein erstes Element bandförmig entlang dem Umfang der ersten Oberfläche (23) des Trägerelementes (11) angeordnet ist, wobei ein oder mehrere weitere Elemente im inneren Bereich der ersten Oberfläche (23) des Trägerelementes (11) angeordnet sind.

2. Dämmelement (16) nach Anspruch 1, wobei der erste Teilbereich (18) zwischen 10 und 80% der ersten Oberfläche (23) beträgt.

3. Dämmelement (16) nach einem der vorhergehenden Ansprüche, wobei ein Verhältnis einer Masse des expandierbaren Materials (13) zu einer Grösse der ersten Oberfläche (23) zwischen 0,15 und 0,75 g/cm² beträgt, und / oder wobei das expandierbare Material (13) eine Expansionsrate von 300 bis 3000 % hat.

4. Dämmelement (16) nach einem der vorhergehenden Ansprüche, wobei eine Breite (27) des Trägerelementes (11) mehr als 50 mm beträgt und wobei eine Länge (26) des Trägerelementes (11) ebenfalls mehr als 50 mm beträgt.

5. Dämmelement (16) nach einem der vorhergehenden Ansprüche, wobei der erste Teilbereich (18) bandförmige Elemente hat.

6. Dämmelement (16) nach einem der vorhergehenden Ansprüche, wobei sich ein zweites bandförmiges Element quer über einen inneren Bereich der ersten Oberfläche (23) des Trägerelementes (11) erstreckt.

7. Dämmelement (16) nach einem der vorhergehenden Ansprüche, wobei das zweite bandförmige Element einen rechteckigen oder V-förmigen oder halbrunden Querschnitt hat.

8. Dämmelement (16) nach einem der vorhergehenden Ansprüche, wobei das zweite bandförmige Element in einer Vertiefung des Trägerelementes (11) angeordnet ist.

9. Dämmelement (16) nach einem der vorhergehenden Ansprüche, wobei die weiteren Elemente untereinander verbunden sind.

10. Dämmelement (16) nach einem der vorhergehenden Ansprüche, wobei die Elemente in einem regelmässigen Muster über die erste Oberfläche (23) des Trägerelementes (11) verteilt sind.

11. System mit einem Strukturelement (12, 14) und einem darin angeordneten Dämmelement (16) nach einem der Ansprüche 1 bis 10.

## Claims

1. Insulating element (16) for insulating a structural element (12, 14) in a vehicle, the insulating element (16) comprising
a carrier element (11) having a first surface (23) and a second surface (24);
and an expandable material (13) which is disposed on the carrier element (11);
wherein the expandable material (13) is disposed on a first part-region (18) of the first surface (23) of the carrier element (11), and a second part-region (19) of the first surface (23) is free of expandable material (13) such that the first surface (23) of the carrier element (11) is completely covered with expanded material (13') upon expansion of the expandable material (13),
**characterized in that** the first part-region (18) is composed of a plurality of non-contiguous elements, and **in that** a first element is disposed in a strip-shaped manner along the circumference of the first surface (23) of the carrier element (11), and wherein one or a plurality of further elements are disposed in the internal region of the first surface (23) of the carrier element (11).

2. Insulating element (16) according to Claim 1, wherein the first part-region (18) is between 10 and 80% of the first surface (23).

3. Insulating element (16) according to either of the preceding claims, wherein a ratio of a mass of the expandable material (13) to a size of the first surface (23) is between 0.15 and 0.75 g/cm² and/or wherein the expandable material (13) has an expansion rate of 300 to 3000%.

4. Insulating element (16) according to one of the preceding claims, wherein a width (27) of the carrier element (11) is more than 50 mm, and wherein a length (26) of the carrier element (11) is likewise more than 50 mm.

5. Insulating element (16) according to one of the preceding claims, wherein the first part-region (18) has strip-shaped elements.

6. Insulating element (16) according to one of the preceding claims, wherein a second strip-shaped element extends transversely across an internal region of the first surface (23) of the carrier element (11).

7. Insulating element (16) according to one of the preceding claims, wherein the second strip-shaped element has a rectangular or V-shaped or semi-circular cross section.

8. Insulating element (16) according to one of the preceding claims, wherein the second strip-shaped element is disposed in a depression of the carrier element (11).

9. Insulating element (16) according to one of the preceding claims, wherein the further elements are interconnected.

10. Insulating element (16) according to one of the preceding claims, wherein the elements are distributed in a regular pattern across the first surface (23) of the carrier element (11).

11. System having a structural element (12, 14) and an insulating element (16) according to one of Claims 1 to 10 disposed therein.

## Revendications

1. Elément d'isolation (16) destiné à isoler un élément structurel (12, 14) dans un véhicule, l'élément d'isolation (16) comprenant
un élément support (11) ayant une première surface (23) et une deuxième surface (24),
et un matériau expansible (13) qui est disposé sur l'élément support (11),
dans lequel le matériau expansible (13) est disposé sur une première zone partielle (18) de la première surface (23) de l'élément support (11), et une deuxième zone partielle (19) de la première surface (23) est exempte de matériau expansible (13) de sorte qu'après une expansion du matériau expansible (13), la première surface (23) de l'élément support (11) est entièrement recouverte de matériau expansé (13'),
**caractérisé en ce que** la première zone partielle (18) est composée de plusieurs éléments non cohérents, et **en ce qu'**un premier élément est disposé en forme de bande le long de la circonférence de la première surface (23) de l'élément support (11), un ou plusieurs éléments supplémentaires étant disposés dans la zone intérieure de la première surface (23) de l'élément support (11).

2. Elément d'isolation (16) selon la revendication 1, dans lequel la première zone partielle (18) représente entre 10 et 80 % de la première surface (23).

3. Elément d'isolation (16) selon l'une quelconque des revendications précédentes, dans lequel un rapport entre une masse du matériau expansible (13) et une dimension de la première surface (23) est compris entre 0,15 et 0,75 g/cm², et/ou le matériau expansible (13) présente un taux d'expansion de 300 à 3000 %.

4. Elément d'isolation (16) selon l'une quelconque des revendications précédentes, dans lequel une largeur (27) de l'élément support (11) est supérieure à 50 mm, et une longueur (26) de l'élément support (11) est également supérieure à 50 mm.

5. Elément d'isolation (16) selon l'une quelconque des revendications précédentes, dans lequel la première zone partielle (18) présente des éléments en forme de bande.

6. Elément d'isolation (16) selon l'une quelconque des revendications précédentes, dans lequel un deuxième élément en forme de bande s'étend en travers d'une zone intérieure de la première surface (23) de l'élément support (11).

7. Elément d'isolation (16) selon l'une quelconque des revendications précédentes, dans lequel le deuxième élément en forme de bande présente une section transversale rectangulaire ou en forme de V ou semi-circulaire.

8. Elément d'isolation (16) selon l'une quelconque des revendications précédentes, dans lequel le deuxième élément en forme de bande est disposé dans un creux de l'élément support (11).

9. Elément d'isolation (16) selon l'une quelconque des revendications précédentes, dans lequel les éléments supplémentaires sont reliés les uns aux autres.

10. Elément d'isolation (16) selon l'une quelconque des revendications précédentes, dans lequel les éléments sont répartis sur la première surface (23) de l'élément support (11) selon un motif régulier.

11. Système comprenant un élément structurel (12, 14) et un élément d'isolation (16) selon l'une quelconque des revendications 1 à 10 disposé dans celui-ci.
